# FASCICULE DE BREVET EUROPEEN

(11) **EP 3 126 175 B1**
(45) Date de publication et mention de la délivrance du brevet: **06.06.2018**
(21) Numéro de dépôt: 15713887.6
(22) Date de dépôt: 01.04.2015
(51) Int. Cl.: B60K 17/356, F16H 61/4139, B60K 23/08

(54) **SYSTÈME D'ASSISTANCE HYDRAULIQUE**
HYDRAULISCHES UNTERSTÜTZUNGSSYSTEM
HYDRAULIC ASSISTANCE SYSTEM

(30) Priorité: 02.04.2014 FR 1452921
(43) Date de publication de la demande: 08.02.2017
(73) Titulaire: Poclain Hydraulics Industrie, 60410 Verberie (FR)
(72) Inventeur: LAMBEY, Julien, Claude, F-60410 Verberie (FR)
(74) Mandataire: Regimbeau
(86) Numéro de dépôt international: PCT/EP2015/057191
(87) Numéro de publication internationale: WO 2015/150462

(56) Documents cités:
- WO-A2-2014/048841
- DE-A1-102010 053 105
- US-A- 3 918 546
- US-A- 5 361 208

## Description

### DOMAINE TECHNIQUE GENERAL

L'invention concerne le domaine des circuits hydrauliques d'assistance utilisés notamment pour des véhicules. En particulier, l'invention concerne l'optimisation du temps d'activation de moteurs hydrauliques d'assistance.

### ETAT DE L'ART

On connait les systèmes d'assistance hydraulique pour véhicules, pouvant être engagés sélectivement en fonction des conditions d'utilisation du véhicule ou sur commande de l'utilisateur.
De tels systèmes viennent ainsi complémenter une transmission principale du véhicule, communément mécanique, électrique ou encore hydrostatique à grande vitesse. Le document DE 10 2010 053 105 A divulgue un procédé d'assistance hydraulique d'un véhicule, ainsi qu'un système d'assistance hydraulique selon le préambule de la revendication 13. Dans l'ensemble du présent texte, on désignera par appareil hydraulique un appareil pouvant fonctionner en tant que moteur ou que pompe hydraulique. Un appareil hydraulique comprend de manière conventionnelle une pluralité de pistons disposés dans des logements, dans un bloc cylindres, et effectuant des mouvements de va et vient au contact d'une came multilobe dans le cas d'un appareil hydraulique à pistons radiaux.
Une structure particulière d'un système d'assistance est présentée dans la demande de brevet EP2013/069519 déposé le 19 septembre 2013 au nom de la demanderesse (voir WO 2014/048841 A, publié après la date de priorité de la présente demande). Cette structure consiste à monter un premier appareil hydraulique que l'on qualifie de menant sur un arbre du véhicule entrainé en rotation par la transmission principale du véhicule, et un ou plusieurs appareils hydrauliques que l'on qualifie de menés, sur un ou des autres arbres du véhicule, non entrainé par la transmission principale, les appareils hydrauliques menant et menés étant reliés par un circuit hydraulique. Les appareils hydrauliques présentent chacun un orifice d'admission et un orifice de refoulement. Les orifices de refoulement sont chacun reliés à un orifice d'admission par des lignes d'admission et de retour.

En fonctionnement sans assistance, les deux appareils hydrauliques sont en configuration de roue libre ; il s'agit ainsi typiquement d'appareils hydrauliques à pistons radiaux, les pistons n'étant pas fonctionnels en mode roue libre.

Plus précisément, pour les appareils hydrauliques à pistons rétractables, on définit une configuration de roue libre, c'est-à-dire une configuration dans laquelle l'appareil hydraulique fonctionne sans pression de fluide et plus particulièrement où les pistons ne sont pas en contact avec la came associée. Pour les appareils hydrauliques à désaccouplement du bloc cylindres, c'est-à-dire que le bloc cylindres n'est plus engagé sur l'arbre, on définit de la même façon une configuration de roue libre, dans laquelle l'arbre n'entraine pas le bloc cylindres (ou inversement).
Dans les deux cas, les pistons n'effectuent pas de mouvements de va et vient au contact de la came multilobe. De telles configurations sont par exemple avantageuses sur des engins ayant des conditions de travail mixtes.
A cette configuration de roue libre s'oppose la configuration de service, dans laquelle l'appareil hydraulique fonctionne avec une pression de fluide et les pistons effectuent un mouvement de va et vient au contact de la came multilobe.
Le passage de la configuration de roue libre à la configuration de service est appelé la mise en service de l'appareil hydraulique.

Lors de l'engagement de l'assistance hydraulique, les différents appareils hydrauliques doivent être mis en service. Pour cela, la demande de brevet FR 1351245 déposée le 13 fevrier 2013 au nom de la demanderesse (voir FR 3 002 018 A, publié après la date de priorité de la présente demande) présente un système de gavage comprenant notamment une source de gavage délivrant un débit, adaptée pour être engagée sélectivement, ladite source de gavage étant reliée à la ligne d'alimentation et à la ligne de refoulement via une ligne de gavage. Dès qu'un glissement est observé sur un train arrière du véhicule, la source de gavage s'active pour délivrer alors un débit à l'appareil hydraulique menant, permettant la mise en service du système d'assistance.

Néanmoins, un tel système de gavage peut présenter un temps de réaction assez élevé (de l'ordre de la seconde), qui correspond au temps nécessaire pour que la mise à pression de gavage des lignes d'alimentation et de refoulement se fasse. De plus, le système d'assistance hydraulique est généralement engagé à la demande du conducteur, qui peut l'activer lors de situations qui ne l'imposent pas nécessairement.
Couplé au temps de réaction de mise en service, il arrive que le système d'assistance hydraulique soit activé lorsque cela n'est pas nécessaire, ce qui provoque une usure évitable du système.

### PRESENTATION DE L'INVENTION

Pour remédier aux inconvénients précédents, l'invention propose un procédé d'assistance hydraulique d'un véhicule comportant :
- deux appareils hydrauliques reliés entre eux par une ligne d'alimentation et une ligne de retour,
- une source de gavage et un réservoir, la source de gavage étant reliée aux lignes d'alimentation et de retour via une ligne de gavage et prélevant l'huile depuis le réservoir,
- une valve de mise à vide, comprenant un port d'entrée relié aux lignes d'alimentation et de retour, et un port de sortie relié au réservoir, la valve de mise à vide ayant un premier état passant et un deuxième état bloquant ;
le procédé comprenant les étapes de :
- E1 : Activation de la source de gavage lorsque le véhicule remplit au moins une condition prédéterminée, la valve de mise à vide étant dans le premier état passant ;
- E2 : Commutation de la valve de mise à vide du premier état passant vers le deuxième état bloquant lorsque l'assistance hydraulique est requise, permettant ainsi le gavage des circuits d'alimentation et de retour.

Un tel procédé permet d'améliorer le temps de réaction de mise en service du système et ainsi de limiter l'utilisation de l'assistance hydraulique aux cas nécessaires.

Avantageusement, l'invention présente les caractéristiques suivantes prises seules ou en combinaison :
- Le procédé comprend une troisième étape E3 : commutation de la valve de mise à vide du deuxième état bloquant vers le premier état passant lorsque l'assistance hydraulique n'est plus requise, la source de gavage restant activée,
- l'étape E2 est toujours réalisée lorsque la source de gavage est activée,
- Le procédé comprend en outre une quatrième étape E4 : désactivation de la source de gavage lorsque le véhicule ne remplit plus une des conditions prédéterminées,
- la source de gavage est un groupe électropompe (GEP) comprenant un moteur électrique et une pompe, et dans lequel l'activation de la source de gavage consiste à alimenter électriquement le moteur électrique dudit groupe,
- la valve de mise à vide est une électrovalve, pilotée électroniquement par une unité de contrôle,
- l'une des conditions prédéterminées est une vitesse du véhicule inférieure à une vitesse seuil, telle que 30km/h,
- l'une des conditions prédéterminées est issue de l'analyse de l'itinéraire et/ou du trajet du véhicule,
- les informations relatives à la condition prédéterminée issue de ladite analyse sont fournies par un système de géolocalisation,
- les machines hydrauliques sont à cylindrée fixe, à pistons radiaux et à came multilobe débrayable,
- le circuit de gavage comprend des clapets anti-retour et des limiteurs de pression entre la source de gavage et les lignes d'alimentation et de retour,
- un sélecteur de circuit est intercalé entre les lignes d'alimentation et de retour et la valve de mise à vide.

L'invention propose aussi un système d'assistance hydraulique comportant :
- deux appareils hydrauliques reliés entre eux par une ligne d'alimentation et une ligne de retour,
- une source de gavage et un réservoir, la source de gavage étant reliée aux lignes d'alimentation et de retour via une ligne de gavage et prélevant l'huile depuis le réservoir,
- une valve de mise à vide, possédant un port d'entrée relié aux lignes d'alimentation et de retour, et un port de sortie relié au réservoir, la valve de mise à vide ayant un premier état passant et un deuxième état bloquant ;
caractérisé en ce que le système hydraulique comporte :
- des moyens de détection d'une condition prédéterminée pour déclencher l'activation de la source de gavage,
- des moyens de détermination du besoin de l'assistance hydraulique,
- des moyens de contrôle des états de la valve de mise à vide ; la valve étant mise dans le premier état passant par les moyens de contrôle des états de la valve lorsque les moyens de détection détectent une des conditions prédéterminées, et la valve étant mise dans le second état bloquant par les moyens de contrôle des états de la valve lorsque les moyens de détermination déterminent un besoin de l'assistance hydraulique, permettant ainsi le gavage des circuits d'alimentation et de retour.

L'invention propose aussi un véhicule équipé d'un système d'assistance hydraulique précédemment décrit et adapté pour mettre en oeuvre un des procédés précédemment décrits.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- Les figures 1a et 1b représentent un schéma hydraulique d'un dispositif permettant de mettre en oeuvre le procédé de l'invention à une certaine étape du procédé ;
- Les figures 2a et 2b représentent un schéma hydraulique d'un dispositif permettant de mettre en oeuvre le procédé de l'invention à une autre étape du procédé ;
- La figure 3 représente un diagramme d'un procédé conforme à l'invention ;

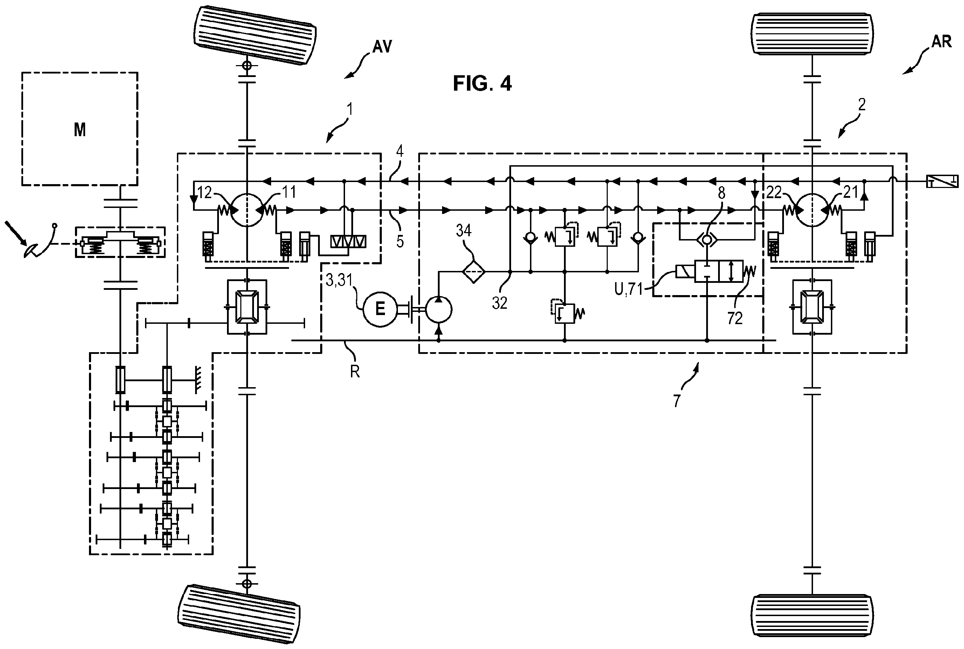

- La figure 4 représente un schéma hydraulique d'un dispositif avec l'assistance hydraulique mise en service ;
- La figure 5 représente l'utilisation d'un GPS pour l'utilisation de l'assistance hydraulique.

### DESCRIPTION DETAILLEE

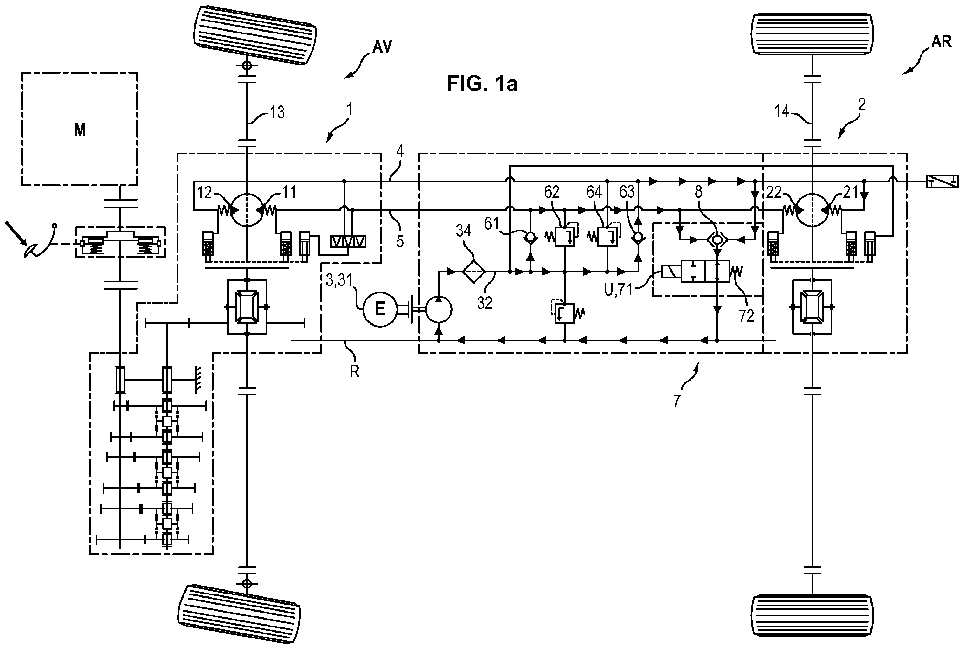

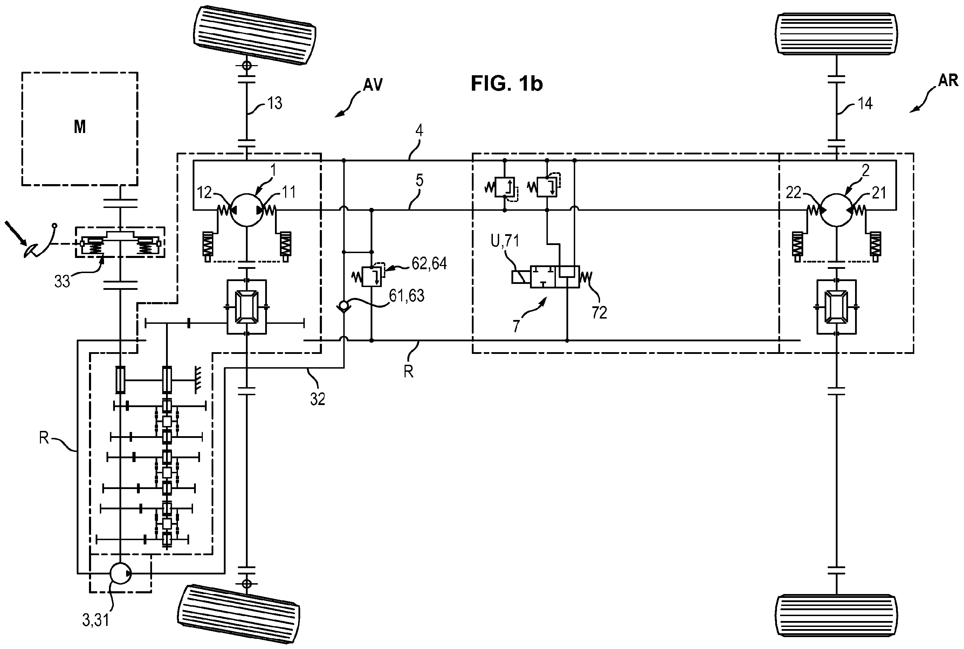

En référence aux **figures 1a****,** **1b** (issue du document EP2013/069519) **et 2,** un schéma du système hydraulique va être décrit.
Le système d'assistance hydraulique est monté sur un véhicule V.
Le système présenté comprend un appareil hydraulique menant 1, monté sur un train avant AV du véhicule V et un appareil hydraulique mené 2, monté sur un train arrière AR du véhicule V. Les appareils hydrauliques 1, 2 sont typiquement à pistons radiaux, à came multilobe et de cylindrée fixe, les pistons radiaux étant montés dans un bloc cylindres. En particulier, la came multilobe est débrayable, notamment par désaccouplement du bloc cylindres et de l'arbre du train.
Afin d'illustrer le fonctionnement du système, on repère pour chacun de ces appareils hydrauliques son admission et son refoulement, respectivement l'admission 11 et le refoulement 12 de l'appareil hydraulique menant 1, et l'admission 21 et le refoulement 22 de l'appareil hydraulique mené 2.
Le refoulement 12 de l'appareil hydraulique menant 1 est relié à l'admission 21 de l'appareil hydraulique mené 2 par une ligne d'alimentation 4, et le refoulement 22 de l'appareil hydraulique mené 2 étant relié à l'admission 11 de l'appareil hydraulique menant 1 par une ligne de retour 5.

Les appareils hydrauliques 1 et 2 sont chacun associé à un arbre tournant, respectivement 13 et 23, typiquement un essieu de véhicule V. Par exemple, les appareils hydrauliques 1, 2 tournent à la vitesse de l'arbre du train, ou bien à la vitesse moyenne des deux roues comprises sur le train (dans le cas d'un différentiel).
Un moteur primaire M est typiquement un moteur thermique ou électrique.

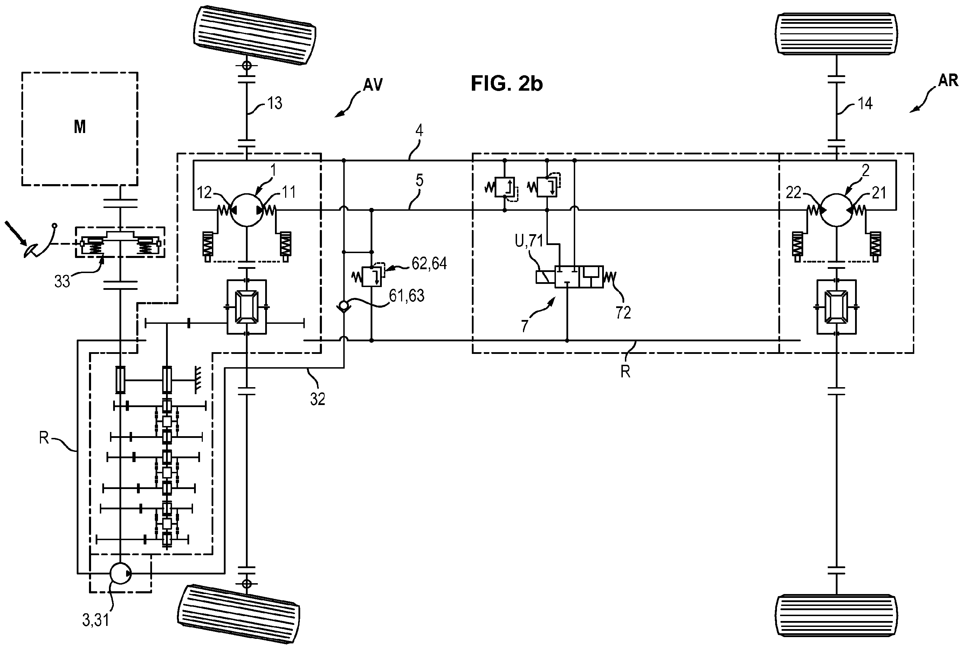

Ce moteur primaire M peut être couplé à une source de gavage 3 via un embrayage 33, permettant l'engagement ou le désengagement de cette source de gavage 3 avec le moteur primaire M (voir **figures 1b****,** **2b**). Ce moteur primaire M est par exemple relié à une transmission principale du véhicule V permettant l'entrainement de ses roues, les différentes structures de transmission principale et de roues étant bien connues de l'homme du métier et n'étant pas représentées sur les figures.
Selon une autre variante, le moteur primaire M est un moteur indépendant par rapport à la transmission principale du véhicule V ou de l'engin considéré. Le moteur primaire M et la source de gavage 3 peuvent alors par exemple former un groupe électropompe (GEP). Typiquement, le groupe électropompe (GEP) comprend le moteur primaire M, lorsqu'il s'agit d'un moteur électrique, et une pompe.

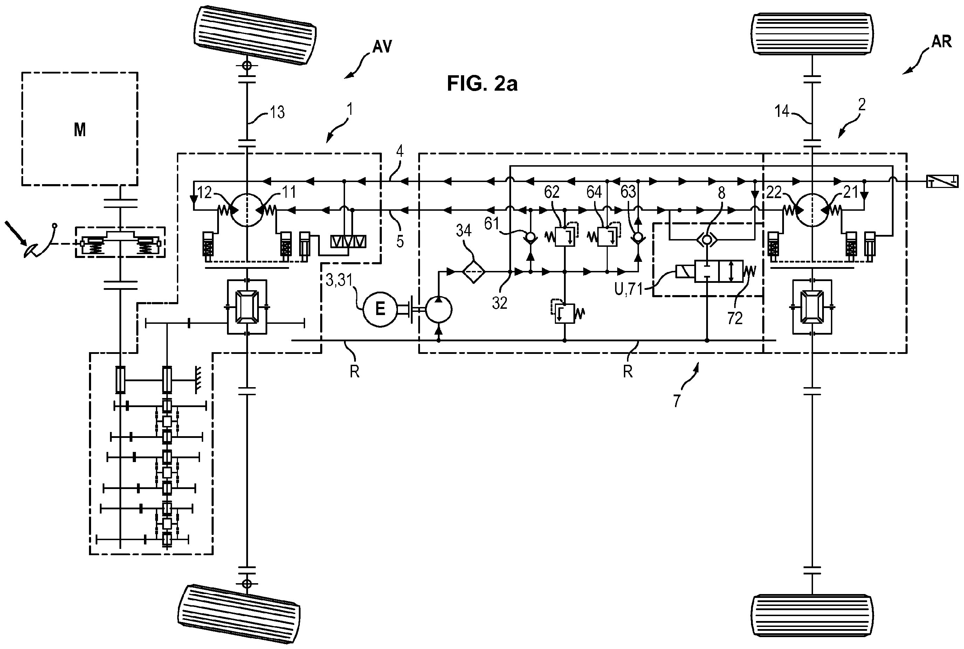

Selon les modes de réalisation représentés, la source de gavage 3 comprend une pompe de gavage 31, et/ou un accumulateur hydraulique (non représenté sur les figures), et/ou un filtre 34 (voir **figures 1a****,** **2a**).

La source de gavage 3 prélève de l'huile dans un réservoir R, typiquement à pression ambiante. Par réservoir, on signifie aussi les lignes de conduite allant jusqu'au réservoir R et pouvant faire office de stockage d'huile.

La source de gavage 3 est reliée aux lignes d'alimentation 4 et de retour 5 via une ligne de gavage 32.

En particulier, la ligne de gavage 32 est reliée à la ligne de retour 5 par un clapet anti-retour 61 dans le sens aller (source de gavage 3 vers ligne de retour 5) et par un limiteur de pression 62 dans le sens retour (ligne de retour 5 vers source de gavage 3). La ligne de gavage 32 est reliée à la ligne d'alimentation 4 par un clapet anti-retour 63 dans le sens aller et par un limiteur de pression 64 dans le sens retour (voir **figures 1a****,** **2a**).

Les appareils hydrauliques menant 1 et mené 2 forment ainsi un circuit hydraulique fermé, dont la source de gavage 3 assure un gavage en pression via les clapets anti-retour 61, 63 et limiteurs de pression 62, 64 afin de compenser les pertes et fuites dans le circuit.

Une valve de mise à vide 7 relie les lignes de retour 5 et d'alimentation 4 au réservoir R.

Selon un premier mode de réalisation (voir **figures 1a****,** **2a**), la valve de mise à vide 7 comprend un port d'entrée et un port de sortie (deux ports, deux positions). Les lignes de retour et d'alimentation sont reliées à deux entrées d'un sélecteur de circuit 8 (voir **figures 1a****,** **2a**), la sortie du sélecteur étant reliée à un port de la valve de mise à vide, le port de sortie de la valve 7 de mise à vide étant relié au réservoir R. Alternativement, le sélecteur de circuit 8 peut être remplacé par un simple noeud (voir **figures 2a****,** **2b**). La ligne issue des lignes d'alimentation 4 et de retour 5 est alors reliée au port d'entrée de la valve de mise à vide 7.
Selon un premier état, la valve 7 est passante et selon un second état, la valve est bloquante.

Selon un second mode de réalisation (voir **figures 2a****,** **2b**), la valve de mise à vide 7 comprend deux ports d'entrée et un port de sortie (trois ports et deux positions). Les lignes d'alimentation 4 et de retour 5 sont chacune reliées à un port d'entrée, le port de sortie de la valve de mise à vide 7 étant toujours relié au réservoir R.
Selon un premier état, la valve 7 est passante, c'est-à-dire que les deux ports d'entrée communiquent avec le port de sortie ; selon un second état, la valve est bloquante.

La valve de mise à vide 7 est pilotée par un actionneur 71 qui peut la commuter du premier au deuxième état. Un élément de rappel 72, tel qu'un ressort, maintient ladite valve 7 dans le premier état par défaut. La valve 7 est par exemple une électrovalve et l'actionneur 71 est commandé par une unité de contrôle U.

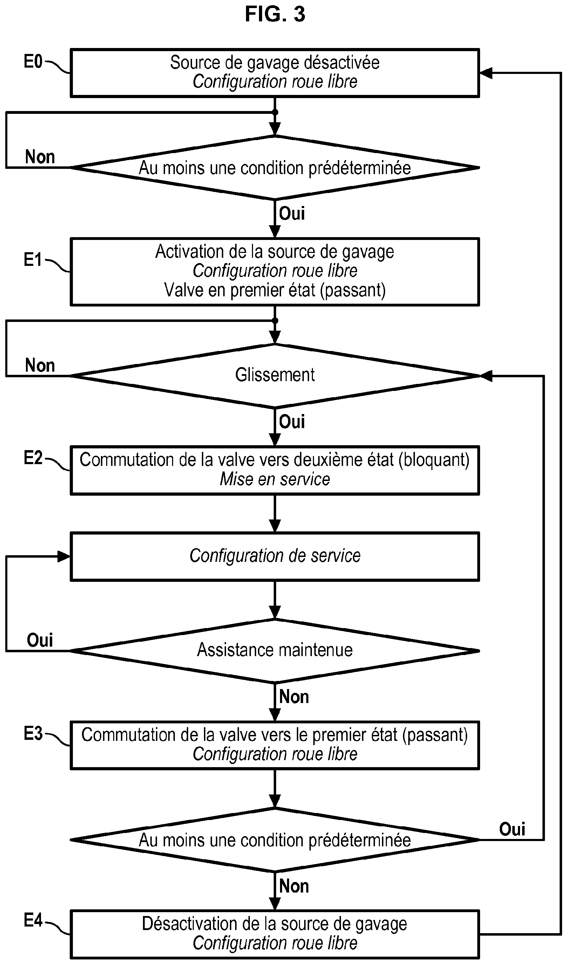

A présent, un procédé d'utilisation du circuit de gavage va être décrit, en référence à la **figure 3****.**

Le système d'assistance hydraulique est prévu pour être activable seulement lorsque le véhicule V vérifie au moins une condition prédéterminée. Dès lors qu'au moins une des conditions prédéterminées est remplie, le véhicule V est dit en état de veille. Par exemple, cet état de veille peut être défini par des vitesses du véhicule V inférieures à une vitesse seuil, typiquement 30 km/h. Pour cela, le système hydraulique ou le véhicule possède des moyens de détection desdites conditions prédéterminées.
Lorsque l'état de veille est effectif, la configuration de service peut être mise en service lors du glissement du train arrière AR ou lorsqu'un conducteur du véhicule V le souhaite. Pour être mise en service, il est nécessaire que les lignes d'alimentation 4 et de retour 5 soient gavées, afin que la mise sous pression desdites lignes soient possibles pour permettre le transfert de couple entre l'appareil menant 1 et l'appareil mené 2.
Le glissement du train arrière AR peut être détecté en particulier en mesurant la vitesse des roues du véhicule V à l'aide de capteurs.

L'arbre 13 applique un couple d'entrée à l'appareil hydraulique menant 1 ; ce dernier étant passé en configuration de service, il délivre alors un débit par l'admission 21 de l'appareil hydraulique mené 2, ce qui provoque sa mise en service.

Dans un premier temps **E1** (voir **figures 1a****,** **1b**), si le véhicule V est dans l'état de veille, la source de gavage 3 est activée, amenant de l'huile depuis le réservoir R dans les lignes d'alimentation 4 et de retour 5, et la valve de mise à vide 7 est dans son premier état (i.e. passant). Typiquement, la source de gavage 3 est le groupe électropompe (GEP). La valve de mise à vide 7 étant alors passante, l'huile injectée par la source de gavage 3 dans les lignes d'alimentation 4 et de retour 5 va retourner dans le réservoir R, via la valve de mise à vide 7 (et/ou le sélecteur de circuit 8), ouvrant ainsi le circuit de gavage des lignes d'alimentation 5 et de retour 4. Le système est donc encore en configuration de roue libre.

Dans un second temps **E2** (voir **figures 2a****,** **2b**), si le véhicule V a besoin de l'assistance hydraulique, c'est-à-dire qu'un glissement est observé, l'unité de contrôle U commande l'actionneur 71 qui provoque la commutation de la valve 7 du premier vers le deuxième état (état bloquant), fermant ainsi le circuit de gavage des lignes d'alimentation et de retour. La source de gavage 3 reste activée. Les circuits d'alimentation 4 et de retour 5 sont alors gavés par la source de gavage 3 et vont permettre le transfert de couple entre l'appareil menant 1 et l'appareil mené 2, ainsi qu'il l'a été expliqué précédemment. Une fois la mise en service effectuée, les appareils hydrauliques 1, 2 sont en configuration de service (voir **figure 3**) : du couple prélevé sur le train avant AV est transféré au train arrière AR.

Dès que l'assistance hydraulique n'est plus demandée, dans un troisième temps **E3,** l'actionneur 71 remet la valve 7 dans son premier état, c'est-à-dire passant et le circuit de gavage est à nouveau ouvert, ce qui fait chuter la pression dans les lignes d'alimentation 4 et de retour 5. Le système hydraulique passe ainsi en configuration de roue libre.

Tant que le véhicule V reste en état de veille, la source de gavage 3 reste activée. La source de gavage 3 tourne donc « à vide ». Enfin, dans un quatrième temps **E4,** si le véhicule V quitte l'état de veille, c'est-à-dire si aucune des conditions prédéterminées n'est remplie, la source de gavage 3 est désactivée.

Afin de pouvoir initialiser ce procédé, il est possible de prévoir une étape préliminaire **E0,** dans laquelle on vérifie qu'aucune des conditions prédéterminées n'est remplie et que la source de gavage 3 est désactivée. En utilisation, l'étape **E0** succédera à l'étape **E4,** permettant de répéter le procédé.

Grâce à ce procédé, le transfert de couple de l'appareil menant 1 vers l'appareil mené 2 s'effectue plus rapidement puisqu'il n'est pas nécessaire d'attendre le temps d'activation de la source de gavage 3, ni d'attendre que le conducteur active l'assistance hydraulique. En outre, les appareils hydrauliques 1, 2 ne sont mis en service qu'en situation de glissement du véhicule V, ce qui permet de diminuer le nombre de cycles effectués par les appareils 1, 2 et permet d'éviter des nuisances sonores.

La source de gavage 3 est dimensionnée de sorte qu'elle soit toujours capable de fournir une quantité d'huile sous une certaine pression, la valve de mise à vide 7 pouvant provoquer des pertes de charge.

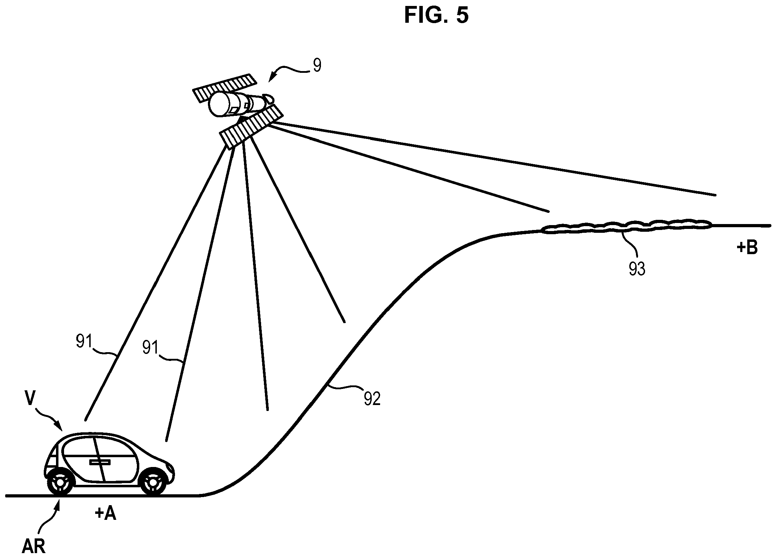

L'état de veille peut aussi être provoqué par des analyses de l'itinéraire et/ ou du trajet effectué par le véhicule V, de façon à anticiper un besoin d'assistance hydraulique. De cette façon, la condition prédéterminée peut typiquement prendre en compte la vitesse du véhicule V et les caractéristiques du trajet (pente, route, etc.)
Par exemple, il est possible de coupler un système de géolocalisation 9, tel qu'un GPS, au système d'assistance hydraulique (voir **figure 5**) pour que ledit système de géolocalisation 9 fournisse les informations relatives à la condition prédéterminée.
Le véhicule V devant se rendre d'un point A à un point B, le système de géolocalisation détecte la position 91 du véhicule V et permet d'anticiper la présence d'une montée 92 et d'un terrain peu praticable 93 (obstacles, boue, etc.) qui nécessitent un couple sur le train arrière AR du véhicule V.
Ainsi, dès que le véhicule atteint le début de la montée 92 et du terrain 93, une condition prédéterminée est alors vérifiée, ce qui déclenche l'état de veille du véhicule V.

## Revendications

1. Procédé d'assistance hydraulique d'un véhicule (V) comportant :
- deux appareils hydrauliques (1, 2) reliés entre eux par une ligne d'alimentation (4) et une ligne de retour (5),
- une source de gavage (3) et un réservoir (R), la source de gavage (3) étant reliée aux lignes d'alimentation (4) et de retour (5) via une ligne de gavage (32) et prélevant l'huile depuis le réservoir (R),
- une valve de mise à vide (7), comprenant un port d'entrée relié aux lignes d'alimentation (4) et de retour (5), et un port de sortie relié au réservoir (R), la valve de mise à vide ayant un premier état passant et un deuxième état bloquant ;
le procédé comprenant les étapes de :
- E1 : Activation de la source de gavage (3) lorsque le véhicule (V) remplit au moins une condition prédéterminée, la valve de mise à vide (7) étant dans le premier état passant ;
- E2 : Commutation de la valve de mise à vide (7) du premier état passant vers le deuxième état bloquant lorsque l'assistance hydraulique est requise, permettant ainsi le gavage des circuits d'alimentation et de retour.

2. Procédé selon la revendication précédente, comprenant en outre une troisième étape E3 : commutation de la valve de mise à vide (7) du deuxième état bloquant vers le premier état passant lorsque l'assistance hydraulique n'est plus requise, la source de gavage (3) restant activée.

3. Procédé selon l'une quelconque des revendications précédentes, dans lequel l'étape E2 est toujours réalisée lorsque la source de gavage (3) est activée.

4. Procédé selon l'une quelconque des revendications précédentes, comprenant en outre une quatrième étape E4 : désactivation de la source de gavage (3) lorsque le véhicule (V) ne remplit plus une des conditions prédéterminées.

5. Procédé selon l'une quelconque des revendications précédentes, dans lequel la source de gavage (3) est un groupe électropompe (GEP) comprenant un moteur électrique (M) et une pompe, et dans lequel l'activation de la source de gavage (3) consiste à alimenter électriquement le moteur électrique dudit groupe.

6. Procédé selon l'une quelconque des revendications précédentes, dans lequel la valve de mise à vide (7) est une électrovalve, pilotée électroniquement par une unité de contrôle (U).

7. Procédé selon l'une quelconque des revendications précédentes, dans lequel l'une des conditions prédéterminées est une vitesse du véhicule (V) inférieure à une vitesse seuil, telle que 30km/h.

8. Procédé selon l'une des revendications précédentes, dans lequel l'une des conditions prédéterminées est issue de l'analyse de l'itinéraire et/ou du trajet du véhicule (V).

9. Procédé selon la revendication précédente, dans lequel les informations relatives à la condition prédéterminée issue de ladite analyse sont fournies par un système de géolocalisation (9).

10. Procédé selon l'une quelconque des revendications précédentes, dans lequel les machines hydrauliques (1, 2) sont à cylindrée fixe, à pistons radiaux et à came multilobe débrayable.

11. Procédé selon l'une quelconque des revendications précédentes, dans lequel le circuit de gavage comprend des clapets anti-retour (61, 63) et des limiteurs de pression (62, 64) entre la source de gavage (3) et les lignes d'alimentation (4) et de retour (5).

12. Procédé selon l'une quelconque des revendications précédentes, dans lequel un sélecteur de circuit (8) est intercalé entre les lignes d'alimentation (4) et de retour (5) et la valve de mise à vide (7).

13. Système d'assistance hydraulique comportant :
- deux appareils hydrauliques (1, 2) reliés entre eux par une ligne d'alimentation (4) et une ligne de retour (5),
- une source de gavage (3) et un réservoir (R), la source de gavage (3) étant reliée aux lignes d'alimentation (4) et de retour (5) via une ligne de gavage (32) et prélevant l'huile depuis le réservoir (R),
- une valve de mise à vide (7), possédant un port d'entrée relié aux lignes d'alimentation (4) et de retour (5), et un port de sortie relié au réservoir (R), la valve de mise à vide ayant un premier état passant et un deuxième état bloquant ;
**caractérisé en ce que** le système hydraulique comporte :
- des moyens de détection d'une condition prédéterminée pour déclencher l'activation de la source de gavage (3),
- des moyens de détermination du besoin de l'assistance hydraulique,
- des moyens de contrôle (71, 72, U) des états de la valve de mise à vide (7);
la valve (7) étant mise dans le premier état passant par les moyens de contrôle des états de la valve (7) lorsque les moyens de détection détectent une des conditions prédéterminées, et
la valve (7) étant mise dans le second état bloquant par les moyens de contrôle des états de la valve (7) lorsque les moyens de détermination déterminent un besoin de l'assistance hydraulique, permettant ainsi le gavage des circuits d'alimentation (4) et de retour (5).

14. Véhicule équipé d'un système d'assistance hydraulique selon la revendication 13 et adapté pour mettre en oeuvre le procédé selon l'une quelconque des revendications 1 à 12.

## Patentansprüche

1. Verfahren zur hydraulischen Unterstützung eines Fahrzeugs (V), das Folgendes umfasst:
- zwei hydraulische Aggregate (1, 2), die durch eine Speiseleitung (4) und eine Rücklaufleitung (5) miteinander verbunden sind,
- eine Ladungsquelle (3) und einen Tank (R), wobei die Ladungsquelle (3) über eine Ladungsleitung (32) mit der Speise- (4) und der Rücklaufleitung (5) verbunden ist und das Öl aus dem Tank (R) entnimmt,
- ein Vakuumventil (7), das einen Eingangsanschluss umfasst, der mit der Speiseleitung (4) und der Rücklaufleitung (5) verbunden ist, und einen Ausgangsanschluss, der mit dem Tank (R) verbunden ist, wobei das Vakuumventil einen ersten Durchlaufzustand und einen zweiten Sperrzustand aufweist;
wobei das Verfahren die folgenden Schritte umfasst:
- E1: Aktivierung der Ladungsquelle (3), wenn das Fahrzeug (V) zumindest eine vorgegebene Bedingung erfüllt, wobei sich das Vakuumventil (7) im ersten Durchlaufzustand befindet;
- E2: Umschaltung des Vakuumventils (7) vom ersten Durchlaufzustand in den zweiten Sperrzustand, wenn hydraulische Unterstützung erforderlich ist, wodurch die Ladung der Speise- und der Rücklaufkreise ermöglicht wird.

2. Verfahren nach dem vorstehenden Anspruch, das ferner einen dritten Schritt E3 umfasst: Umschalten des Vakuumventils (7) vom zweiten Sperrzustand in den ersten Sperrzustand, wenn keine hydraulische Unterstützung mehr erforderlich ist, wobei die Ladungsquelle (3) aktiviert bleibt.

3. Verfahren nach einem beliebigen der vorstehenden Ansprüche, wobei der Schritt E2 immer dann ausgeführt wird, wenn die Ladungsquelle (3) aktiviert wird.

4. Verfahren nach einem beliebigen der vorstehenden Ansprüche, das ferner einen vierten Schritt E4 umfasst: Deaktivierung der Ladungsquelle (3), wenn das Fahrzeug (V) eine der vorgegebenen Bedingungen nicht mehr erfüllt.

5. Verfahren nach einem beliebigen der vorstehenden Ansprüche, wobei die Ladungsquelle (3) ein Elektropumpenaggregat (EPA) ist, das einen Elektromotor (M) und eine Pumpe umfasst, und wobei die Aktivierung der Ladungsquelle (3) darin besteht, den Elektromotor des Aggregats mit Strom zu versorgen.

6. Verfahren nach einem beliebigen der vorstehenden Ansprüche, wobei das Vakuumventil (7) ein Magnetventil ist, das von einer Steuereinheit (U) elektronisch gesteuert wird.

7. Verfahren nach einem beliebigen der vorstehenden Ansprüche, wobei eine der vorgegebenen Bedingungen eine Geschwindigkeit des Fahrzeugs (V) unterhalb einer Grenzgeschwindigkeit wie 30 km/h ist.

8. Verfahren nach einem beliebigen der vorstehenden Ansprüche, wobei eine der vorgegebenen Bedingungen aus der Analyse der Route und/oder der Strecke des Fahrzeugs (V) abgeleitet wird.

9. Verfahren nach dem vorstehenden Anspruch, wobei die Daten über die vorgegebene Bedingung, die sich aus der Analyse ergibt, von einem Geolokalisierungssystem (9) bereitgestellt werden.

10. Verfahren nach einem beliebigen der vorstehenden Ansprüche, wobei die hydraulischen Maschinen (1, 2) solche mit fixem Hubraum, mit Radialkolben und multilobale auskuppelbare Nockenmaschinen sind.

11. Verfahren nach einem beliebigen der vorstehenden Ansprüche, wobei der Ladungskreis Rückschlagventile (61, 63) und Druckbegrenzer (62, 64) zwischen der Ladungsquelle (3) und den Speiseleitungen (4) und den Rücklaufleitungen (5) umfasst.

12. Verfahren nach einem beliebigen der vorstehenden Ansprüche, wobei ein Schaltungswähler (8) zwischen den Speise- (4) und den Rücklaufleitungen (5) und dem Vakuumventil (7) eingesetzt wird.

13. Hydraulisches Unterstützungssystem, das Folgendes umfasst:
- zwei hydraulische Aggregate (1, 2), die durch eine Speiseleitung (4) und eine Rücklaufleitung (5) miteinander verbunden sind,
- eine Ladungsquelle (3) und einen Tank (R), wobei die Ladungsquelle (3) über eine Ladungsleitung (32) mit der Speise- (4) und der Rücklaufleitung (5) verbunden ist und das Öl aus dem Tank (R) entnimmt,
- ein Vakuumventil (7), mit einem Eingangsanschluss, der mit den Speise- (4) und Rücklaufleitungen (5) verbunden ist, und einen Ausgangsanschluss, der mit dem Tank (R) verbunden ist, wobei das Vakuumventil einen ersten Durchgangszustand und einen zweiten Sperrzustand aufweist;
**dadurch gekennzeichnet, dass** das Hydrauliksystem Folgendes umfasst:
- Mittel zum Erfassen eines vorgegebenen Zustands, um die Aktivierung der Ladungsquelle (3) auszulösen,
- Mittel zur Ermittlung des Bedarfs an hydraulischer Unterstützung,
- Mittel zur Steuerung (71, 72, U) der Zustände des Vakuumventils (7);
wobei das Ventil (7) von den Mitteln zur Steuerung der Zustände des Ventils (7) in den ersten Durchgangszustand versetzt wird, wenn die Mittel zur Erfassung eine der vorgegebenen Zustände erfassen, und
wobei das Ventil (7) durch Mittel zur Steuerung der Zustände des Ventils (7) in den zweiten Sperrzustand versetzt wird, wenn die Bestimmungsmittel einen Bedarf an hydraulischer Unterstützung bestimmen, wodurch die Ladung der Speise- (4) und der Rücklaufkreise (5) ermöglicht wird.

14. Fahrzeug, das mit einem hydraulischen Unterstützungssystem nach Anspruch 13 ausgerüstet und für den Einsatz des Verfahrens nach einem der Ansprüche 1 bis 12 geeignet ist.

## Claims

1. A hydraulic assistance method for a vehicle (V) including:
- two hydraulic devices (1, 2) interconnected by a supply line (4) and a return line (5),
- a booster source (3) and a reservoir (R), the booster source (3) being connected to the supply (4) and return (5) lines via a booster line (32) and taking oil from the reservoir (R),
- a vacuum valve (7), comprising an input port connected to the supply (4) and return (5) lines, and an output port connected to the reservoir (R), the vacuum valve having a first, passing, state and a second, blocking, state;
the method comprising the steps of:
- E1: Activation of the booster source (3) when the vehicle (V) satisfies at least one predetermined condition, the vacuum valve (7) being in the first, passing, state;
- E2: Switching of the vacuum valve (7) from the first, passing, state to the second, blocking, state when hydraulic assistance is required, thus allowing boosting of the supply and return circuits.

2. The method according to the preceding claim, further comprising a third step E3: switching of the vacuum valve (7) from the second, blocking, state to the first, passing, state when hydraulic assistance is no longer required, the booster source (3) remaining activated.

3. The method according to any one of the preceding claims, wherein step E2 is always carried out when the booster source (3) is activated.

4. The method according to any one of the preceding claims, further comprising a fourth step E4: deactivation of the booster source (3) when the vehicle (V) no longer satisfies one of the predetermined conditions.

5. The method according to any one of the preceding claims, wherein the booster source (3) is an electro-pump unit (GEP) comprising an electric motor (M) and a pump, and wherein the activation of the booster source (3) consists of supplying electric power to the electric motor of said unit.

6. The method according to any one of the preceding claims, wherein the vacuum valve (7) is a solenoid valve, controlled electronically by a control unit (U).

7. The method according to any one of the preceding claims, wherein one of the predetermined conditions is a speed of the vehicle (V) lower than a threshold speed, such as 30 km/h.

8. The method according to one of the preceding claims, wherein one of the predetermined conditions results from the analysis of the itinerary and/or the trajectory of the vehicle (V).

9. The method according to the preceding claim, wherein the information relative to the predetermined condition resulting from said analysis is provided by a global positioning system (9).

10. The method according to any one of the preceding claims, wherein the hydraulic machines (1, 2) are fixed displacement machines, having radial pistons and multilobe cam that can be disengaged.

11. The method according to any one of the preceding claims, wherein the booster circuit comprises non-return valves (61, 63) and pressure limiters (62, 64) between the booster source (3) and the supply (4) and return (5) lines.

12. The method according to any one of the preceding claims, wherein a circuit selector (8) is interposed between the supply (4) and return (5) lines and the vacuum valve (7).

13. A hydraulic assistance system including:
- two hydraulic devices (1, 2) interconnected by a supply line (4) and a return line (5),
- a booster source (3) and a reservoir (R), the booster source (3) being connected to the supply (4) and return (5) lines via a booster line (32) and taking oil from the reservoir (R),
- a vacuum valve (7), comprising an input port connected to the supply (4) and return (5) lines, and an output port connected to the reservoir (R), the vacuum valve having a first, passing, state and a second, blocking, state;
**characterized in that** the hydraulic system includes:
- means for detecting a predetermined condition for triggering the activation of the booster source (3),
- means of determining the need for hydraulic assistance,
- means of controlling (71, 72, U) the states of the vacuum valve (7);
the valve (7) being put in the first, passing, state by the means for controlling the states of the valve (7) when the detection means detect one of the predetermined conditions, and
the valve (7) being put in the second, blocking, state by the means for controlling the states of the valve (7) when the determination means determine a need for hydraulic assistance, thus allowing boosting of the supply (4) and return (5) circuits.

14. A vehicle equipped with a hydraulic assistance system according to claim 13 and adapted to implement the method according to any one of claims 1 to 12.
